(19) Europäisches Patentamt
European Patent Office
Office européen des brevets

(11) **EP 4 557 429 A1**

(12) **EUROPEAN PATENT APPLICATION**
published in accordance with Art. 153(4) EPC

(43) Date of publication:
**21.05.2025 Bulletin 2025/21**

(21) Application number: **23857772.0**

(22) Date of filing: **25.08.2023**

(51) International Patent Classification (IPC):
**H01M 10/0562** (2010.01)     **H01M 10/052** (2010.01)

(52) Cooperative Patent Classification (CPC):
**H01M 10/052; H01M 10/0562; Y02E 60/10**

(86) International application number:
**PCT/KR2023/012616**

(87) International publication number:
**WO 2024/043740 (29.02.2024 Gazette 2024/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.08.2022 KR 20220106849**

(71) Applicant: **LG Chem, Ltd.**
**Yeongdeungpo-gu**
**Seoul 07336 (KR)**

(72) Inventors:
• **JEON, Do Yeon**
**Daejeon 34122 (KR)**

• **SON, Byoung Kuk**
**Daejeon 34122 (KR)**
• **LEE, Seong Ho**
**Daejeon 34122 (KR)**
• **PARK, Chang Hun**
**Daejeon 34122 (KR)**
• **KIM, In Gyu**
**Daejeon 34122 (KR)**
• **CHUNG, Ha Bin**
**Daejeon 34122 (KR)**
• **LEE, Dong Geon**
**Daejeon 34122 (KR)**

(74) Representative: **Hoffmann Eitle**
**Patent- und Rechtsanwälte PartmbB**
**Arabellastraße 30**
**81925 München (DE)**

(54) **SOLID ELECTROLYTE AND ALL-SOLID-STATE BATTERY COMPRISING SAME**

(57)     The present invention aims to improve atmospheric stability of a conventional sulfide-based solid electrolyte, wherein the present invention relates to a solid electrolyte having an argyrodite-type crystal structure which is doped with a cation having a ratio $(r/r_s)$ of an ionic radius $(r)$ (unit: Å) value of the cation to an ionic radius $(r_s)$ (unit: Å) value of $S^{2-}$ of 0.20 to 0.30 and an all-solid battery including the same.

FIG. 1

Example 1 ---- Example 4 —·— Example 5

EP 4 557 429 A1

## Description

### TECHNICAL FIELD

Cross-reference to Related Applications

This application claims priority from Korean Patent Application No. 10-2022-0106849, filed on August 25, 2022, the disclosure of which is incorporated by reference herein.

Technical Field

The present invention relates to a solid electrolyte having an argyrodite-type crystal structure with improved atmospheric stability and an all-solid battery including the same.

### BACKGROUND ART

An all-solid battery is a battery that replaces a liquid electrolyte filling between a positive electrode and a negative electrode of a conventional lithium secondary battery with a solid, wherein, since it has higher energy density than the conventional battery while being safe as there is no risk of explosion, it is attracting attention as a next-generation battery. A solid electrolyte used in the all-solid battery is a material in a solid state that may conduct lithium ions in the battery, wherein it has high ionic conductivity comparable to that of an electrolyte solution currently used in the lithium secondary battery. Core materials constituting the solid electrolyte include a polymer, a sulfide, or an oxide, but, among them, a sulfide-based solid electrolyte with high ductility and ionic conductivity is evaluated as suitable for preparing a high-capacity large battery.

However, since the sulfide-based solid electrolyte is highly reactive to moisture, it has a problem in that it reacts not only with the moisture in the air but also with the moisture in low humidity conditions to generate hydrogen sulfide ($H_2S$), a harmful gas. Accordingly, the toxic hydrogen sulfide may not only adversely affect safety of workers, but may also degrade performance of the sulfide-based solid electrolyte itself.

Thus, there is a need to develop a sulfide-based solid electrolyte with excellent atmospheric stability.

### DISCLOSURE OF THE INVENTION

#### TECHNICAL PROBLEM

An object of the present invention is to provide a solid electrolyte with improved atmospheric stability, specifically, moisture stability.

However, the object of the present invention is not limited to the aforesaid, but other objects not described herein will be clearly understood by those skilled in the art from descriptions below.

#### TECHNICAL SOLUTION

In order to solve the above-described tasks, the present invention provides a solid electrolyte and an all-solid battery.

(1) The present invention provides a solid electrolyte having an argyrodite-type crystal structure which is doped with a cation having a ratio ($r/r_s$) of an ionic radius ($r$) (unit: Å) value of the cation to an ionic radius ($r_s$) (unit: Å) value of $S^{2-}$ of 0.20 to 0.30.

(2) The present invention provides the solid electrolyte of (1) above, wherein the cation has a ratio ($c/r$) of an ion's oxidation number ($c$) value to the ionic radius ($r$) (unit: Å) value of 7.00 to 14.00.

(3) The present invention provides the solid electrolyte of (1) or (2) above, wherein the solid electrolyte has a composition represented by Formula 1.

[Formula 1]   $Li_a(P_{1-b}M_b) S_c X_d$

In Formula 1,

M is at least one selected from tin (Sn), niobium (Nb), nickel (Ni), germanium (Ge), gallium (Ga), and aluminum (Al),
X is at least one selected from fluorine (F), chlorine (Cl), bromine (Br), and iodine (I), and

$5.0 < a < 7.5$, $0 < b \leq 0.7$, $3.5 \leq c \leq 7$, and $0.8 \leq d \leq 1.7$.

(4) The present invention provides the solid electrolyte of any one of (1) to (3) above, wherein M is at least one selected from Sn, Nb, Ge, and Al.

(5) The present invention provides the solid electrolyte of any one of (1) to (4) above, wherein a ratio (y/ (x+y)) of the number of moles of M to a total sum of the number of moles (x) of P and the number of moles (y) of M satisfies 0.01 to 0.7.

(6) The present invention provides the solid electrolyte of any one of (1) to (5) above, wherein an ionic conductivity retention ratio according to Equation 1 is 55% or more.

[Equation 1]

$$\text{Ionic conductivity retention ratio (\%)} = \frac{\text{ionic conductivity after moisture exposure (mS/cm)}}{\text{initial ionic conductivity (mS/cm)}} \times 100$$

In Equation 1,

the initial ionic conductivity is a value measured at 22°C immediately after preparation of the solid electrolyte, and the ionic conductivity after moisture exposure is a value measured at 22°C immediately after exposure of the solid electrolyte to air with a relative humidity of 1.91% for 5 hours.

(7) The present invention provides the solid electrolyte of (6) above, wherein the initial ionic conductivity is in a range of 2.0 mS/cm to 20.0 mS/cm.

(8) The present invention provides the solid electrolyte of any one of (6) or (7) above, wherein the ionic conductivity after moisture exposure is in a range of 1.4 mS/cm to 18.0 mS/cm.

(9) The present invention provides the solid electrolyte of any one of (1) to (8) above, wherein, in relation to an impurity peak present in a range of 5,200 cm$^{-1}$ to 4,725 cm$^{-1}$ in a near-infrared (NIR) spectrum, an area increase rate of the impurity peak according to Equation 2 is in a range of 50% to 400%.

[Equation 2]

$$\text{Area increase rate of the impurity peak (\%)} = \frac{\text{integral value of the impurity peak after moisture exposure}}{\text{integral value of the impurity peak before moisture exposure}} \times 100$$

In Equation 2,

the integral value of the impurity peak before moisture exposure is a value obtained from a NIR spectrum measured at room temperature immediately after preparation of the solid electrolyte, and the integral value of the impurity peak after moisture exposure is a value obtained from a NIR spectrum measured at room temperature immediately after exposure of the solid electrolyte to air with a relative humidity of 1.91% for 5 hours.

(10) The present invention provides the solid electrolyte of (9) above, wherein the integral value of the impurity peak after moisture exposure is in a range of 1 to 20.

(11) The present invention provides the solid electrolyte of any one of (1) to (10) above, wherein an average particle diameter ($D_{50}$) is in a range of 0.5 μm to 4 μm.

(12) The present invention provides the solid electrolyte of any one of (1) to (11) above, wherein a span value ($[D_{90}-D_{10}]/D_{50}$) is 4 or less.

(13) The present invention provides an all-solid battery including the solid electrolyte of any one of (1) to (12) above.

## ADVANTAGEOUS EFFECTS

Since a solid electrolyte having an argyrodite-type crystal structure according to the present invention is doped with a cation having a ratio ($r/r_s$) of an ionic radius (r) (unit: Å) value of the cation to an ionic radius ($r_s$) (unit: Å) value of $S^{2-}$ of 0.20 to 0.30, the solid electrolyte itself has an advantage of excellent atmospheric stability.

## BRIEF DESCRIPTION OF THE DRAWINGS

FIG. 1 is a view illustrating X-ray diffraction (XRD) graphs of solid electrolytes of Examples 1, 4, and 5.
FIG. 2 is a view illustrating XRD graphs of solid electrolytes of Comparative Examples 3, 4, and 5.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

In this specification, an ionic radius is a Shannon ionic radius.

In this specification, '$D_n$' denotes a particle diameter at n% of cumulative distribution of volume according to the particle diameter. That is, $D_{50}$ is a particle diameter at 50% of the cumulative distribution of volume according to the particle diameter, $D_{90}$ is a particle diameter at 90% of the cumulative distribution of volume according to the particle diameter, and $D_{10}$ is a particle diameter at 10% of the cumulative distribution of volume according to the particle diameter. The $D_n$ may be measured by using a laser diffraction method. Specifically, after dispersing measurement target powder in a dispersion medium (xylene), the dispersion medium is introduced into a commercial particle size analyzer (e.g., Malvern Panalytical, Mastersizer 3000) and a particle size distribution is calculated by measuring a difference in diffraction patterns due to a particle size when particles pass through a laser beam. The $D_{10}$, $D_{50}$, and $D_{90}$ may be measured by calculating particle diameters at 10%, 50%, and 90% of the cumulative distribution of volume according to the particle diameter using the measurement instrument.

## Solid Electrolyte

A solid electrolyte according to the present invention has an argyrodite-type crystal structure that is doped with a cation having a ratio ($r/r_s$) of an ionic radius (r) (unit: Å) value of the cation to an ionic radius ($r_s$) (unit: Å) value of $S^{2-}$ of 0.20 to 0.30.

The present inventors found that, with respect to the solid electrolyte having the argyrodite-type crystal structure according to the present invention, since it is doped with the cation having the ratio ($r/r_s$) of the ionic radius (r) (unit: Å) value of the cation to the ionic radius ($r_s$) (unit: Å) value of the $S^{2-}$ of 0.20 to 0.30, the solid electrolyte itself not only has excellent atmospheric stability, but may also improve chemical resistance in dry and wet processes when a battery is prepared, thereby leading to the completion of the present invention.

With respect to $Li_6PS_5Cl$ or $Li_6PS_5Br$, which is used as a solid electrolyte having an argyrodite-type crystal structure in the art, there is a problem in that $S^{2-}$ ions contained in the solid electrolyte react with moisture in the air to be easily decomposed. However, since the solid electrolyte having the argyrodite-type crystal structure according to the present invention is doped with the cation having a strong binding force with the $S^{2-}$ ion, specifically, the cation having the ratio ($r/r_s$) of the ionic radius (r) (unit: Å) value of the cation to the ionic radius ($r_s$) (unit: Å) value of the $S^{2-}$ of 0.20 to 0.30, it may suppress decomposition and degradation of solid electrolyte particles when exposed to moisture or oxygen. As a result, generation of hydrogen sulfide, a toxic gas, may be suppressed, and a decrease in ionic conductivity of the solid electrolyte may be inhibited. The ratio ($r/r_s$) of the ionic radius (r) (unit: Å) value of the cation to the ionic radius ($r_s$) (unit: Å)

value of the $S^{2-}$ may specifically be 0.20 or more, 0.21 or more, or 0.25 or more, and may be 0.30 or less.

In a case in which the ratio ($r/r_s$) of the ionic radius (r) (unit: Å) value of the cation to the ionic radius ($r_s$) (unit: Å) value of the $S^{2-}$ is less than 0.20, there is a problem in that a decomposition reaction caused by the moisture easily occurs due to a low binding force between the cation and the $S^{2-}$. In addition, in a case in which the ratio ($r/r_s$) of the ionic radius (r) (unit: Å) value of the cation to the ionic radius ($r_s$) (unit: Å) value of the $S^{2-}$ is greater than 0.30, since a size of the cation is so large that the doping of the cation into the argyrodite-type crystal structure is difficult, there is not only no effect of improving moisture stability, but there is also a problem in that impurities are generated to decrease ionic conductivity.

According to the present invention, the cation may have a ratio (c/r) of an ion's oxidation number (c) value to the ionic radius (r) (unit: Å) value of 7.00 to 14.00. In this case, since the cation may be easily doped at a P-site where the cation bonds to the $S^{2-}$, initial ionic conductivity may be improved, and moisture stability may be improved due to a good binding force between the cation and the $S^{2-}$.

According to the present invention, the solid electrolyte may have a composition represented by Formula 1 below. In this case, the solid electrolyte may have high ionic conductivity and may have low reactivity with a lithium negative electrode, and the decomposition and degradation of the solid electrolyte particles when exposed to moisture or oxygen may be suppressed.

$$[\text{Formula 1}] \qquad Li_a(P_{1-b}M_b)S_cX_d$$

In Formula 1,

M is at least one selected from tin (Sn), niobium (Nb), nickel (Ni), germanium (Ge), gallium (Ga), and aluminum (Al),
X is at least one selected from fluorine (F), chlorine (Cl), bromine (Br), and iodine (I), and
$5.0 < a < 7.5$, $0 < b \leq 0.7$, $3.5 \leq c \leq 7$, and $0.8 \leq d \leq 1.7$.

According to the present invention, M is a doping element doped into the solid electrolyte having the argyrodite-type crystal structure, wherein M may be at least one selected from Sn, Nb, Ni, Ge, Ga, and Al, specifically, at least one selected from Sn, Nb, Ge, and Al.

According to the present invention, a ratio ($y/(x+y)$) of the number of moles of M to a total sum of the number of moles (x) of P and the number of moles (y) of M of the solid electrolyte satisfies 0.01 to 0.7, specifically, 0.01 or more, and 0.5 or less, 0.6 or less, or 0.7 or less. In this case, since a doping amount is appropriate, the solid electrolyte may exist in an argyrodite phase with no or low content of impurities, and, accordingly, the ionic conductivity may be improved.

According to the present invention, the solid electrolyte may have an ionic conductivity retention ratio according to the following Equation 1 of 55% or more, specifically, 55% or more, and 70% or less, 75% or less, 80% or less, 85% or less, or 90% or less.

$$[\text{Equation 1}]$$

$$\text{Ionic conductivity retention ratio (\%)} = \frac{\text{ionic conductivity after moisture exposure (mS/cm)}}{\text{initial ionic conductivity (mS/cm)}} \times 100$$

In Equation 1,

the initial ionic conductivity is a value measured at 22°C immediately after preparation of the solid electrolyte, and the ionic conductivity after moisture exposure is a value measured at 22°C immediately after exposure of the solid electrolyte to air with a relative humidity of 1.91% for 5 hours.

According to the present invention, the solid electrolyte may have the initial ionic conductivity of 2.0 mS/cm to 20.0 mS/cm, specifically, 2.0 mS/cm or more, or 2.5 mS/cm or more, and 10.0 mS/cm or less, 15.0 mS/cm or less, or 20.0 mS/cm or less. The higher the ionic conductivity of the electrolyte is, the better it is, but, in a case in which the initial ionic conductivity satisfies the above range, the effect of improving moisture stability may be excellent.

According to the present invention, the solid electrolyte may have the ionic conductivity after moisture exposure of 1.4 mS/cm to 18.0 mS/cm, specifically, 1.4 mS/cm or more, or 1.5 mS/cm or more, and 9.0 mS/cm or less, 10.0 mS/cm or less, 11.0 mS/cm or less, 12.0 mS/cm or less, 13.0 mS/cm or less, 14.0 mS/cm or less, 15.0 mS/cm or less, 16.0 mS/cm or less, 17.0 mS/cm or less, or 18.0 mS/cm or less. In this case, there is an advantage in that an electrolyte structure is maintained even when exposed to moisture during a battery preparation process.

According to the present invention, in relation to an impurity peak present in a range of 5,200 cm$^{-1}$ to 4,725 cm$^{-1}$ in a near-infrared (NIR) spectrum of the solid electrolyte, the solid electrolyte may have an area increase rate of the impurity peak according to Equation 2 below of 50% to 400%, specifically, 50% or more, 100% or more, 150% or more, or 200% or more, and 350% or less, or 400% or less.

[Equation 2]

$$\text{Area increase rate of the impurity peak (\%)} = \frac{\text{integral value of the impurity peak after moisture exposure}}{\text{integral value of the impurity peak before moisture exposure}} \times 100$$

In Equation 2,

the integral value of the impurity peak before moisture exposure is a value obtained from a NIR spectrum measured at room temperature immediately after preparation of the solid electrolyte, and
the integral value of the impurity peak after moisture exposure is a value obtained from a NIR spectrum measured at room temperature immediately after exposure of the solid electrolyte to air with a relative humidity of 1.91% for 5 hours.

According to the present invention, the solid electrolyte may have the integral value of the impurity peak after moisture exposure of 1.00 to 10.0, specifically, 1.00 or more, and 5.00 or less, or 10.0 or less. In this case, since the electrolyte structure is maintained even after the moisture exposure, ionic conductivity performance may be maintained.

According to the present invention, the solid electrolyte may have an average particle diameter ($D_{50}$) of 0.5 $\mu$m to 4.0 um, specifically, 0.5 $\mu$m, 1.0 $\mu$m, or 2.0 $\mu$m or more, and 3.5 $\mu$m, or 4.0 $\mu$m or less. In a case in which the average particle diameter of the solid electrolyte is within the above range, since a contact with an electrode active material is good, life characteristics of the battery may be excellent.

According to the present invention, the solid electrolyte may have a span value ($[D_{90}-D_{10}]/D_{50}$) of 4.0 or less, specifically, 1.0 to 4.0. In a case in which the span value of the solid electrolyte is within the above range, since a particle size is uniform, there is an advantage in that a uniform composite electrode may be prepared.

The solid electrolyte according to the present invention, for example, may be synthesized through mechanical milling and solid-phase synthesis. Specifically, at least one selected from LiCl, LiBr, and LiI, $Li_2S$, $P_2S_5$, and a doping element-containing raw material (ex. $SnS_2$, $GeS_2$, etc.) are weighed according to stoichiometry and then mixed by ball milling. The mixed precursor thus obtained is crystallized by a heat treatment, and then ground again through ball milling. The mixing, heat treatment, and grinding processes are performed in an inert gas atmosphere.

## All-Solid Battery

The present invention provides an all-solid battery including the above solid electrolyte.

Specifically, the all-solid battery includes a positive electrode including a positive electrode active material, a negative electrode including a negative electrode active material, and a solid electrolyte layer including the solid electrolyte according to the present invention, which is disposed between the positive electrode and the negative electrode.

Since the all-solid battery according to the present invention has a small decrease in ionic conductivity due to moisture, initial efficiency, life characteristics, and output characteristics of the battery may be excellent.

In this case, the all-solid battery of the present invention may be prepared according to a typical method known in the art. For example, the all-solid battery of the present invention may be prepared by stacking and pressing such that the solid electrolyte layer exists between the positive electrode and the negative electrode.

## (1) Positive Electrode

The positive electrode may be prepared by coating a positive electrode collector with a slurry for a positive electrode that includes a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, microscopic irregularities may be formed on its surface to improve bonding strength with the positive electrode active material, and the positive electrode collector may be used in various shapes such as that of a film, a sheet, a foil, a net, a porous body, a foam body, a non-woven fabric body, and the like.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where 0<Y<1), $LiMn_{2-Z}Ni_ZO_4$ (where 0<Z<2), etc.), lithium-nickel-cobalt-based oxide (e.g., $LiNi_{1-Y1}Co_{Y1}O_2$ (where 0<Y1<1), etc.), lithium-manganese-cobalt-based oxide (e.g., $LiCo_{1-Y2}Mn_{Y2}O_2$ (where 0<Y2<1), $LiMn_{2-Z1}Co_{z1}O_4$ (where 0<Z1<2), etc.), lithium-nickel-manganese-cobalt-based oxide (e.g., $Li(Ni_pCo_qMn_{r1})O_2$ (where 0<p<1, 0<q<1, 0<r1<1, and p+q+r1=1) or $Li(Ni_{p1}Co_{q1}Mn_{r2})O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{S2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium metal oxide may be $LiCoO_2$, $LiMnO_2$, $LiNiO_2$, lithium nickel manganese cobalt oxide (e.g., $Li(Ni_{1/3}Mn_{1/3}Co_{1/3})O_2$, $Li(Ni_{0.6}Mn_{0.2}CO_{0.2})O_2$, $Li(Ni_{0.5}Mn_{0.3}CO_{0.2})O_2$, $Li(Ni_{0.7}Mn_{0.15}Co_{0.15})O_2$, and $Li(Ni_{0.8}Mn_{0.1}Co_{0.1})O_2$, etc.), or lithium nickel cobalt aluminum oxide (e.g., $LiNi_{0.8}Co_{0.15}Al_{0.05}O_2$, etc.), and, in consideration of a significant improvement effect due to the control of types and content ratios of components constituting the lithium composite metal oxide, the lithium composite metal oxide may be $Li(Ni_{0.6}Mn_{0.2}CO_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$, and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on a total weight of solid content excluding the solvent in the slurry for a positive electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The conductive agent is a component for further improving conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, or thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably 70 wt% to 95 wt%, and more preferably 70 wt% to 90 wt%.

**(2) Negative Electrode**

The negative electrode, for example, may be prepared by coating a slurry for a negative electrode, which includes a negative electrode active material, a binder, a conductive agent, and a solvent, on a negative electrode collector, or a graphite electrode formed of carbon (C) or a metal itself may be used as the negative electrode.

For example, in a case in which the negative electrode is prepared by coating the slurry for a negative electrode on the negative electrode collector, the negative electrode collector generally has a thickness of 3 μm to 500 μm. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The negative electrode active material may include at least one negative electrode active material selected from the group consisting of natural graphite, artificial graphite, a carbonaceous material; lithium-containing titanium composite oxide (LTO), silicon (Si), $SiO_x$, metals (Me) such as Sn, lithium (Li), zinc (Zn), magnesium (Mg), cadmium (Cd), cerium (Ce), Ni, or Fe; alloys composed of the metals (Me); oxides ($MeO_x$) of the metals (Me); and composites of the metals (Me) and carbon. A silicon-based negative electrode active material including silicon (Si), silicon oxide ($SiO_x$), or a silicon alloy may specifically be used as the negative electrode active material. In this case, since a thin and stable SEI layer containing a siloxane bond is formed, the high-temperature stability and life characteristics of the battery may be further improved.

The negative electrode active material may be included in an amount of 60 wt% to 99 wt%, preferably 70 wt% to 99 wt%, and more preferably 80 wt% to 98 wt% based on a total weight of solid content excluding the solvent in the slurry for a negative electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the slurry for a negative electrode.

The conductive agent is a component for further improving conductivity of the negative electrode active material. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content excluding the solvent in the slurry for a negative electrode.

The solvent may include water or an organic solvent, such as NMP (N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, preferably, 70 wt% to 90 wt%.

In a case in which the metal itself is used as the negative electrode, the negative electrode may be a metal thin film itself or may be prepared by a method in which the metal is physically bonded, rolled, or deposited on the negative electrode collector. As the deposition method, an electrical deposition method or a chemical vapor deposition method for the metal may be used.

For example, the metal thin film itself or the metal to be bonded/rolled/deposited on the negative electrode collector may include one type of metal selected from the group consisting of lithium (Li), nickel (Ni), tin (Sn), copper (Cu), and indium (In) or an alloy of two types of metals.

### (3) Solid Electrolyte Layer

The solid electrolyte layer may further include a binder in addition to the solid electrolyte according to the present invention.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% to 20 wt%, preferably 1 wt% to 15 wt%, and more preferably 1 wt% to 10 wt% based on a total weight of the solid electrolyte layer.

The present invention provides a battery module including the all-solid battery as a unit cell and a battery pack including the battery module may be provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims included herein.

## Examples and Comparative Examples

### Example 1

4 types of precursors, $Li_2S$, $P_2S_5$, LiBr, and $SnS_2$, were dry-mixed (ball-milled) at a molar ratio of 5.05:0.95:2:0.1. During the dry mixing, a planetary ball mill, into which zirconia balls were introduced, was used and rotated at a speed of 300 rpm to 700 rpm for uniform mixing. Thereafter, the mixed precursor thus obtained was crystallized by performing a heat treatment at 500°C to 600°C for 12 hours, and then ground again through ball milling to prepare a solid electrolyte having a composition that is represented by $Li_{6.05}P_{0.95}Sn_{0.05}S_5Br$ having an argyrodite-type crystal structure. All of the above processes were performed in an inert argon (Ar) atmosphere.

### Example 2

A solid electrolyte (having an argyrodite-type crystal structure, and having a composition represented by $Li_{6.02}P_{0.98}Sn_{0.02}S_5Br$) was prepared in the same manner as in Example 1 except that 4 types of precursors, $Li_2S$, $P_2S_5$, LiBr, and $SnS_2$, were mixed at a molar ratio of 5.02:0.98:2:0.04.

### Example 3

A solid electrolyte (having an argyrodite-type crystal structure, and having a composition represented by $Li_{6.01}P_{0.99}Sn_{0.01}S_5Br$) was prepared in the same manner as in Example 1 except that 4 types of precursors, $Li_2S$, $P_2S_5$, LiBr, and $SnS_2$, were mixed at a molar ratio of 5.01:0.99:2:0.02.

### Example 4

A solid electrolyte (having an argyrodite-type crystal structure, and having a composition represented by $Li_{6.6}P_{0.4}Ge_{0.6}S_5I$) was prepared in the same manner as in Example 1 except that 4 types of precursors, $Li_2S$, $P_2S_5$, LiI, and $GeS_2$, were mixed at a molar ratio of 5.6:0.4:2:1.2.

### Example 5

A solid electrolyte (having an argyrodite-type crystal structure, and having a composition represented by $Li_{5.5}P_{0.9}Ga_{0.1}S_{4.65}Br$) was prepared in the same manner as in Example 1 except that 4 types of precursors, $Li_2S$, $P_2S_5$, LiBr, and $Ga_2S_3$, were mixed at a molar ratio of 2.25:0.45:1:0.05.

### Comparative Example 1

3 types of precursors, $Li_2S$, $P_2S_5$, and LiBr, were dry-mixed (ball-milled) at a molar ratio of 5:1:2. During the dry mixing, a planetary ball mill, into which zirconia balls were introduced, was used and rotated at a speed of 300 rpm to 700 rpm for uniform mixing. Thereafter, the mixed precursor thus obtained was crystallized by performing a heat treatment at 500°C to 600°C for 12 hours, and then ground again through ball milling to prepare $Li_6PS_5Br$ having an argyrodite-type crystal structure. All of the above processes were performed in an inert Ar atmosphere.

The $Li_6PS_5Br$ having the argyrodite-type crystal structure was used as a solid electrolyte of Comparative Example 1.

### Comparative Example 2

A solid electrolyte (having an argyrodite-type crystal structure, and having a composition represented by $Li_6PS_5Cl$) was prepared in the same manner as in Example 1 except that 3 types of precursors, $Li_2S$, $P_2S_5$, and LiCl,

were mixed at a molar ratio of 5:1:2.

**Comparative Example 3**

A solid electrolyte (having an argyrodite-type crystal structure, and having a composition represented by $Li_{5.55}P_{0.95}Hf_{0.05}S_{4.75}Cl$) was prepared in the same manner as in Example 1 except that 4 types of precursors, $Li_2S$, $P_2S_5$, LiCl, and $HfCl_4$, were mixed at a molar ratio of 4.75:0.95:1.6:0.1.

**Comparative Example 4**

A solid electrolyte (having an argyrodite-type crystal structure, and having a composition represented by $Li_{5.6}P_{0.9}Hf_{0.1}S_{4.75}Cl$) was prepared in the same manner as in Example 1 except that 4 types of precursors, $Li_2S$, $P_2S_5$, LiCl, and $HfCl_4$, were mixed at a molar ratio of 5:0.9:1.2:0.2.

**Comparative Example 5**

A solid electrolyte (having an argyrodite-type crystal structure, and having a composition represented by $Li_{5.85}P_{0.9}Hf_{0.1}S_{4.75}Cl_{1.25}$) was prepared in the same manner as in Example 1 except that 4 types of precursors, $Li_2S$, $P_2S_5$, LiCl, and $HfCl_4$, were mixed at a molar ratio of 5:0.9:1.7:0.2.

**Comparative Example 6**

A solid electrolyte (having an argyrodite-type crystal structure, and having a composition represented by $Li_{5.6}P_{0.9}Hf_{0.1}S_{4.5}Cl_{0.5}Br$) was prepared in the same manner as in Example 1 except that 5 types of precursors, $Li_2S$, $P_2S_5$, LiCl, LiBr, and $HfCl_4$, were mixed at a molar ratio of 4.5:0.9:0.2:2:0.2.

**Comparative Example 7**

A solid electrolyte (having an argyrodite-type crystal structure, and having a composition represented by $Li_{6.1}P_{0.9}Si_{0.1}S_5Br$) was prepared in the same manner as in Example 1 except that 4 types of precursors, $Li_2S$, $P_2S_5$, LiBr, and $SiS_2$, were mixed at a molar ratio of 5.1:0.9:2:0.2.

**Comparative Example 8**

A solid electrolyte (having an argyrodite-type crystal structure, and having a composition represented by $Li_{6.2}P_{0.8}Si_{0.2}S_5Br$) was prepared in the same manner as in Example 1 except that 4 types of precursors, $Li_2S$, $P_2S_5$, LiBr, and $SiS_2$, were mixed at a molar ratio of 5.2:0.8:2:0.4.

For each of the solid electrolytes prepared in Examples 1 to 4 and Comparative Examples 3 to 8, a ratio ($r/r_s$) of an ionic radius (r) (unit: Å) value of a cation doped at a P-site to an ionic radius ($r_s$) (unit: Å) value of $S^{2-}$ and a ratio (c/r) of an ion's oxidation number value to the ionic radius (r) (unit: Å) value of the cation doped at the P-site are presented in Table 1 below.

For reference, for each of the solid electrolytes (not doped with cations) prepared in Comparative Examples 1 and 2, a ratio of an ionic radius (unit: Å) value of $P^{5+}$ to an ionic radius (unit: Å) value of $S^{2-}$ and a ratio of an ion's oxidation number value to the ionic radius (unit: Å) value of $P^{5+}$ were calculated and presented in Table 1 below.

[Table 1]

|  | $r/r_s$ | c/r |
|---|---|---|
| Example 1 | 0.30 | 7.27 |
| Example 2 | 0.30 | 7.27 |
| Example 3 | 0.30 | 7.27 |
| Example 4 | 0.21 | 10.26 |
| Example 5 | 0.26 | 6.38 |
| Comparative Example 1 | 0.09 | 29.41 |
| Comparative Example 2 | 0.09 | 29.41 |

(continued)

|  | $r/r_s$ | $c/r$ |
|---|---|---|
| Comparative Example 3 | 0.32 | 6.90 |
| Comparative Example 4 | 0.32 | 6.90 |
| Comparative Example 5 | 0.32 | 6.90 |
| Comparative Example 6 | 0.32 | 6.90 |
| Comparative Example 7 | 0.14 | 15.38 |
| Comparative Example 8 | 0.14 | 15.38 |

**Experimental Example 1: X-ray Diffraction Analysis, Particle Size Analysis**

(Confirmation of the Presence of Cation Doping of the Solid Electrolyte)

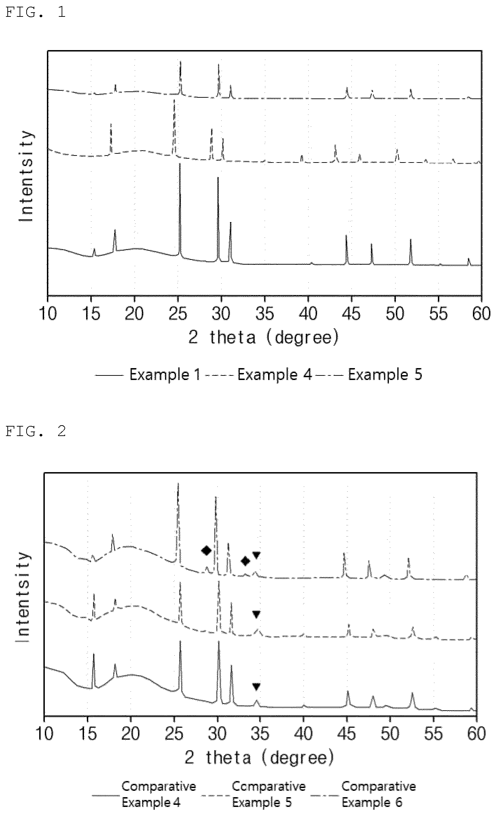

The presence of cation doping of the solid electrolytes prepared in Examples 1, 4, and 5 and Comparative Examples 4 to 6 was confirmed by X-ray diffraction (XRD) analysis, and the XRD analysis was performed using a Bruker AXS D8 Endeavor XRD (voltage: 40 kV, current: 40 mA) with Cu Ka radiation (wavelength: 1.54 Å) at a scanning rate of 0.02°/0.3 sec in a 2-theta range of 10° to 60°. Graphs of XRD analysis results of Examples 1, 4, and 5 and Comparative Examples 4 to 6 are illustrated in FIGS. 1 and 2.

Referring to FIG. 1, with respect to the solid electrolytes of Examples 1, 4, and 5, since no unreacted impurity phase was detected, it may be confirmed that they each were a 100% argyrodite phase and it may be understood that they were doped with cations.

In contrast, referring to FIG. 2, with respect to the solid electrolytes of Comparative Examples 4 to 6, excessive amounts of unreacted impurity phases, which were estimated to be lithium halide (indicated by a diamond shape) and an unknown phase (indicated by an inverted triangle), were detected.

(Confirmation of Average Particle Diameters and Span Values of the Solid Electrolytes)

$D_{10}$, $D_{50}$, and $D_{90}$ of the solid electrolytes prepared in Examples 1 to 5 and Comparative Examples 1 and 2 were measured using a particle size analyzer (Malvern Panalytical, Mastersizer 3000), and the average particle diameter ($D_{50}$) and a span value calculated according to Equation 3 below are presented in Table 2 below.

$$[\text{Equation 3}]$$

$$\text{Span} = [D_{90} - D_{10}]/D_{50}$$

[Table 2]

|  | $D_{50}$ ($\mu$m) | Span |
|---|---|---|
| Example 1 | 2.8 | 2.0 |
| Example 2 | 2.9 | 3.1 |
| Example 3 | 2.9 | 3.4 |
| Example 4 | 3.0 | 3.3 |
| Example 5 | 3.0 | 3.7 |
| Comparative Example 1 | 3.1 | 4.1 |
| Comparative Example 2 | 3.4 | 4.6 |

Referring to Table 2, with respect to the solid electrolytes of Examples 1 to 5, it may be understood that they had uniform particle sizes in comparison to the solid electrolytes of the comparative examples.

**Experimental Example 2: Evaluation of Ionic Conductivity Retention Ratio**

**- Initial Ionic Conductivity Evaluation**

150 mg of each of the solid electrolyte powders prepared in Examples 1 to 4 and Comparative Examples 1 to 8 was taken and put into a SUS mold with a diameter of 13 mm immediately after the preparation. A potentiostat was connected to the SUS mold in a state in which the mold was mounted on a press along with PEEK for insulation. After an electrolyte structure was sufficiently densified by pressing at a pressure of 370 MPa, alternating current impedance measurement was performed at a measurement frequency of 1 Hz to 7 MHz while the pressure was slowly reduced and maintained at 100 MPa. Through a Nyquist plot, ionic conductivity was calculated from the measured resistance values and presented in Table 3 below. All measurements were conducted in a drying room at a temperature of 22°C and a relative humidity of 0.7%.

**- Ionic Conductivity Evaluation After Moisture Exposure**

Immediately after each of the solid electrolyte powders prepared in Examples 1 to 4 and Comparative Examples 1 to 8 was exposed to air with a relative humidity of 1.91% for 5 hours, 150 mg of each solid electrolyte powder was taken and put into a SUS mold with a diameter of 13 mm. A potentiostat was connected to the SUS mold in a state in which the mold was mounted on a press along with PEEK for insulation. After an electrolyte structure was sufficiently densified by pressing at a pressure of 370 MPa, alternating current impedance measurement was performed at a measurement frequency of 1 Hz to 7 MHz while the pressure was slowly reduced and maintained at 100 MPa. Through a Nyquist plot, ionic conductivity after moisture exposure was calculated from the measured resistance values and presented in Table 3 below. All measurements were conducted in a drying room at a temperature of 22°C and a relative humidity of 0.7%.

An ionic conductivity retention ratio was calculated according to Equation 1 below and presented in Table 3 below.

[Equation 1]

$$\text{Ionic conductivity retention ratio (\%)} = \frac{\text{ionic conductivity after moisture exposure (mS/cm)}}{\text{initial ionic conductivity (mS/cm)}} \times 100$$

[Table 3]

|  | Initial ionic conductivity (mS/cm) | Ionic conductivity after moisture exposure (mS/cm) | Ionic conductivity retention ratio (%) |
|---|---|---|---|
| Example 1 | 2.79 | 1.55 | 55.8 |
| Example 2 | 2.76 | 1.69 | 61.1 |
| Example 4 | 6.47 | 3.98 | 61.5 |
| Example 5 | 2.10 | 1.46 | 70.0 |
| Comparative Example 1 | 2.44 | 1.32 | 54.2 |
| Comparative Example 2 | 3.02 | 1.25 | 41.4 |
| Comparative Example 3 | 2.96 | 0.975 | 32.9 |
| Comparative Example 4 | 2.93 | 0.790 | 27.0 |
| Comparative Example 5 | 2.59 | 0.697 | 26.9 |
| Comparative Example 6 | 3.76 | 1.55 | 41.2 |
| Comparative Example 7 | 3.09 | 1.57 | 50. 9 |
| Comparative Example 8 | 3.86 | 1.77 | 45.9 |

Referring to Table 3, with respect to the solid electrolytes of the examples, since they had better moisture stability than the solid electrolytes of the comparative examples, it may be confirmed that ionic conductivity retention ratios were high even after the moisture exposure. In addition, with respect to the solid electrolytes of Examples 1, 2, and 4 which were doped with the cations having the ratio (c/r) of the ion's oxidation number (c) value to the ionic radius (r) (unit: Å) of 7.00 to 14.00, it may be confirmed that they had higher initial ionic conductivities than the solid electrolyte of Example 5, which was doped with the cation having the c/r value of less than 7.00. The reason for this is that the lower the c/r value is, the better the binding force between the cation and the $S^{2-}$ is, but, if the c/r value is excessively low, the P-site doping is difficult to degrade ionic conductivity performance.

**Experimental Example 3: Impurity Analysis After Moisture Exposure**

Immediately after the preparation of the solid electrolyte powders in Examples 1, 2, and 5 and Comparative Examples 1 to 7 and immediately after the exposure of the solid electrolyte powders immediately after the preparation to air with a relative humidity of 1.91% for 5 hours, each powder was taken and put into a glass vial and a NIR reflection spectrum of the solid electrolyte in the glass vial was obtained using an FT-NIR spectrometer (ABB, MB3600) equipped with a diffuse reflectance accessory ($8 cm^{-1}$ resolution, 32 scans). After baseline correction of $5,300 cm^{-1}$ and $4,685 cm^{-1}$, integral values of NIR peaks related to $Li_2CO_3$ impurities in a range of $5,200 cm^{-1}$ to $4,725 cm^{-1}$ were calculated and presented in Table 4 below, respectively.

For reference, analysis conditions are as follows.

-    Covering Range: 3,700 to $14,885 cm^{-1}$ range
-    Interferometer Mechanism: High-throughput doble pivot Michelson
-    NIR source: Quartz-halogen (Elec. Controlled)
-    Laser source: Solid-state Laser (Long lifetime)
-    Optical material: Completely non-Hygroscopic optics (ZnSe)
-    Detector: TE cooled InGaAs detector

In addition, an area increase rate of the impurity peak was calculated according to Equation 2 below and presented in Table 4 below.

[Equation 2]

$$\text{Area increase rate of the impurity peak (\%)} = \frac{\text{integral value of the impurity peak after moisture exposure}}{\text{integral value of the impurity peak before moisture exposure}} \times 100$$

[Table 4]

|  | Integral value of the impurity peak before moisture exposure | Integral value of the impurity peak after moisture exposure | Area increase rate of the impurity peak (%) |
|---|---|---|---|
| Example 1 | 1.33 | 3.37 | 253 |
| Example 2 | 1.31 | 4.38 | 334 |
| Example 5 | 1.24 | 3.87 | 312 |
| Comparative Example 1 | 1.20 | 5.32 | 443 |
| Comparative Example 2 | 1.30 | 6.48 | 498 |
| Comparative Example 3 | 1.16 | 6.11 | 527 |
| Comparative Example 4 | 1.14 | 5.94 | 521 |
| Comparative Example 5 | 1.20 | 5.80 | 483 |
| Comparative Example 6 | 1.16 | 8.69 | 749 |

(continued)

| | Integral value of the impurity peak before moisture exposure | Integral value of the impurity peak after moisture exposure | Area increase rate of the impurity peak (%) |
|---|---|---|---|
| Comparative Example 7 | 1.21 | 5.50 | 455 |

Referring to Table 4, since area increase rates of the impurity peaks of the solid electrolytes of the examples were low even after the moisture exposure, it may be confirmed that the solid electrolytes of the examples had better moisture stability than the solid electrolytes of the comparative examples. That is, it may be confirmed that the electrolyte structures of the solid electrolytes of the examples were maintained even after the moisture exposure.

As a result, since the solid electrolyte having the argyrodite-type crystal structure according to the present invention was doped with the cation having the ratio ($r/r_s$) of the ionic radius (r) (unit: Å) value of the cation to the ionic radius ($r_s$) (unit: Å) value of the $S^{2-}$ of 0.20 to 0.30, it may be understood that decomposition and degradation of the sulfide-based solid electrolyte particles during the moisture exposure may be suppressed.

**Claims**

1. A solid electrolyte having an argyrodite-type crystal structure that is doped with a cation having a ratio ($r/r_s$) of an ionic radius (r) (unit: Å) value of the cation to an ionic radius ($r_s$) (unit: Å) value of $S^{2-}$ of 0.20 to 0.30.

2. The solid electrolyte of claim 1, wherein the cation has a ratio (c/r) of an ion's oxidation number (c) value to the ionic radius (r) (unit: Å) value of 7.00 to 14.00.

3. The solid electrolyte of claim 1, wherein the solid electrolyte has a composition represented by Formula 1:

    [Formula 1]   $Li_a(P_{1-b}M_b)S_cX_d$

    wherein, in Formula 1,

    M is at least one selected from tin (Sn), niobium (Nb), nickel (Ni), germanium (Ge), gallium (Ga), and aluminum (Al),
    X is at least one selected from fluorine (F), chlorine (Cl), bromine (Br), and iodine (I), and
    $5.0<a<7.5$, $0<b\leq0.7$, $3.5\leq c\leq7$, and $0.8\leq d\leq1.7$.

4. The solid electrolyte of claim 3, wherein M is at least one selected from Sn, Nb, Ge, and Al.

5. The solid electrolyte of claim 3, wherein a ratio (y/ (x+y)) of the number of moles of M to a total sum of the number of moles (x) of P and the number of moles (y) of M satisfies 0.01 to 0.7.

6. The solid electrolyte of claim 1, wherein an ionic conductivity retention ratio according to Equation 1 is 55% or more:

    [Equation 1]

    $$\text{Ionic conductivity retention ratio (\%)} = \frac{\text{ionic conductivity after moisture exposure (mS/cm)}}{\text{initial ionic conductivity (mS/cm)}} \times 100$$

    wherein, in Equation 1,

    the initial ionic conductivity is a value measured at 22°C immediately after preparation of the solid electrolyte, and
    the ionic conductivity after moisture exposure is a value measured at 22°C immediately after exposure of the solid electrolyte to air with a relative humidity of 1.91% for 5 hours.

7. The solid electrolyte of claim 6, wherein the initial ionic conductivity is in a range of 2.0 mS/cm to 20.0 mS/cm.

8. The solid electrolyte of claim 6, wherein the ionic conductivity after moisture exposure is in a range of 1.4 mS/cm to 18.0 mS/cm.

9. The solid electrolyte of claim 1, wherein, in relation to an impurity peak present in a range of 5,200 cm$^{-1}$ to 4,725 cm$^{-1}$ in a near-infrared (NIR) spectrum, an area increase rate of the impurity peak according to Equation 2 is in a range of 50% to 400%:

[Equation 2]

$$\text{Area increase rate of the impurity peak (\%)} = \frac{\text{integral value of the impurity peak after moisture exposure}}{\text{integral value of the impurity peak before moisture exposure}} \times 100$$

wherein, in Equation 2,

the integral value of the impurity peak before moisture exposure is a value obtained from a NIR spectrum measured at room temperature immediately after preparation of the solid electrolyte, and

the integral value of the impurity peak after moisture exposure is a value obtained from a NIR spectrum measured at room temperature immediately after exposure of the solid electrolyte to air with a relative humidity of 1.91% for 5 hours.

10. The solid electrolyte of claim 9, wherein the integral value of the impurity peak after moisture exposure is in a range of 1 to 20.

11. The solid electrolyte of claim 1, wherein an average particle diameter ($D_{50}$) is in a range of 0.5 $\mu$m to 4 $\mu$m.

12. The solid electrolyte of claim 1, wherein a span value ($[D_{90}\text{-}D_{10}]/D_{50}$) is 4 or less.

13. An all-solid battery comprising the solid electrolyte of any one of claims 1 to 12.

FIG. 1

— Example 1 ---- Example 4 —·— Example 5

FIG. 2

Comparative Example 4　　Comparative Example 5　　Comparative Example 6

**INTERNATIONAL SEARCH REPORT**

| International application No. |
| --- |
| **PCT/KR2023/012616** |

| A. | CLASSIFICATION OF SUBJECT MATTER |
| --- | --- |

**H01M 10/0562**(2010.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 10/0562(2010.01); C01B 25/08(2006.01); C01G 19/00(2006.01); C01G 30/00(2006.01); C03C 3/32(2006.01); H01M 10/052(2010.01); H01M 4/62(2006.01); H01M 6/18(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 고체 전해질 (solid electrolyte), Li2S, P2O5, LiBr, LiI, SnS2, GeS2, Ge2S3, 아지로다이트형 결정 구조 (argyrodite-type crystalline structure), 전고체 전지 (solid cell)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2021-0101061 A (SAMSUNG SDI CO., LTD.) 18 August 2021 (2021-08-18) See claims 1, 8, 10, 19 and 20; paragraphs [0107], [0171]-[0174], [0181]-[0186] and [0212]; and table 1. | 1-13 |
| X | CN 112777632 A (WUHAN INSTITUTE OF MARINE ELECTRIC PROPULSION (CHINA SHIPBUILDING INDUSTRY CORPORATION NO.712 INSTITUTE)) 11 May 2021 (2021-05-11) See claim 1; paragraphs [0023], [0035], [0036] and [0040]; and examples 6-11. | 1-13 |
| A | JP 2018-029058 A (IDEMITSU KOSAN CO., LTD.) 22 February 2018 (2018-02-22) See paragraph [0090]. | 1-13 |
| A | WO 2018-096957 A1 (NATIONAL INSTITUTE OF ADVANCED INDUSTRIAL SCIENCE AND TECHNOLOGY et al.) 31 May 2018 (2018-05-31) See entire document. | 1-13 |
| A | JP 03-013706 B2 (SANYO ELECTRIC CO., LTD.) 25 February 1991. See entire document. | 1-13 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 November 2023** | **24 November 2023** |

| Name and mailing address of the ISA/KR | Authorized officer |
| --- | --- |
| **Korean Intellectual Property Office** **Government Complex-Daejeon Building 4, 189 Cheongsa-** **ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/012616**

| Patent document cited in search report | | | Publication date (day/month/year) | Patent family member(s) | | | Publication date (day/month/year) |
|---|---|---|---|---|---|---|---|
| KR | 10-2021-0101061 | A | 18 August 2021 | US | 2023-0084324 | A1 | 16 March 2023 |
| | | | | WO | 2021-157896 | A1 | 12 August 2021 |
| CN | 112777632 | A | 11 May 2021 | CN | 112777632 | B | 03 May 2022 |
| JP | 2018-029058 | A | 22 February 2018 | JP | 2021-192375 | A | 16 December 2021 |
| | | | | JP | 6936073 | B2 | 15 September 2021 |
| | | | | JP | 7258089 | B2 | 14 April 2023 |
| WO | 2018-096957 | A1 | 31 May 2018 | JP | 7113513 | B2 | 05 August 2022 |
| JP | 03-013706 | B2 | 25 February 1991 | JP | 59-073850 | A | 26 April 1984 |

Form PCT/ISA/210 (patent family annex) (July 2022)

**EP 4 557 429 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220106849